# EUROPEAN PATENT SPECIFICATION

(11) **EP 4 433 315 B1**
(45) Date of publication and mention of the grant of the patent: **01.10.2025**
(21) Application number: 21810022.0
(22) Date of filing: 15.11.2021
(51) Int. Cl.: B62D 25/14, B60K 35/50, B60H 1/00

(54) **A CROSS-CAR BEAM ASSEMBLY WITH AN INNER VENTILATION DUCT**
QUERTRÄGERANORDNUNG MIT EINEM INNEREN BELÜFTUNGSKANAL
ENSEMBLE POUTRE TRANSVERSALE DOTÉ D'UN CONDUIT DE VENTILATION INTERNE

(43) Date of publication of application: 25.09.2024
(73) Proprietor: Wuhan Lotus Cars Co., Ltd., Wuhan, Hubei (CN)
(72) Inventor: CIMATTI, Franco, 41026 Pavullo nel Frignano (MO) (IT)
(74) Representative: Studio Torta S.p.A.
(86) International application number: PCT/EP2021/081718
(87) International publication number: WO 2023/083482

(56) References cited:
- EP-A1- 0 662 901
- EP-B1- 0 662 901
- WO-A1-2019/157510
- DE-A1- 19 933 533
- DE-U1- 20 008 201
- FR-A1- 2 789 043
- FR-A1- 2 795 701
- US-A1- 2002 145 309

## Description

The present invention relates to a cross-car beam assembly for use in a motor vehicle, such as in a car, a bus or a truck, in particular in an electric vehicle.

### Background of the invention

Cross-car beams are widely used in motor vehicles. They typically extend in a width direction of the vehicle in between different sidewall portions. Accordingly, they cross the car and more precisely a longitudinal axis thereof. Further, they are typically provided opposite the front seats and/or carry an instrument panel, a steering wheel or the like.

When providing ventilation inside the passenger cabin, it is known to at least indirectly support the ventilation ducts by the cross-car beam. Figuratively speaking, the cross-car beam may carry the ventilation ducts or at least indirectly provide a stiffening or strengthening function for said ducts. An example can be found in GB 2 335 396 A in which a cross-car beam provides a stiffening function for a foam body, said foam body also comprising various ventilation ducts.

The known solutions occupy a comparatively large space. Also, they may be difficult and costly to manufacture.

FR 2 789 043 A1 discloses a transverse beam defining a cavity and radial openings. An air pipe housed in the cavity emerges outside the radial openings. In particular, this document discloses a cross-car beam assembly according to the preamble of claim 1.

US 2002/145309 A1 discloses a vehicular air-conditioning duct structure included in a beam member, comprising: at least two beam member bodies that are divisible longitudinally with respect to, and that form, the beam member; and a material for a duct integrated on an inner surface of each of the two beam member bodies, wherein at least the two beam member bodies are joined such that a joining surface of each body faces each other in order to join the surfaces to form a closed, tubular portion.

DE 199 33 533 A1 discloses an air guidance system for a motor vehicle, with at least one air-guiding inner tube arranged in a hollow support of the vehicle structure that is closed in cross-section, even more curved or angled hollow supports that are closed in cross-section over greater lengths are produced in a simple and space-saving manner without manufacturing disruptive side effects included directly in the air control system in that the hollow beam is longitudinally divided into two half-shells and the inner tube is inserted between them before connecting the half-shells.

EP 0 662 901 A1 discloses a dashboard that comprises a cross-bearer and an instrument panel attached thereto. The cross-bearer comprises a hollow section into which pipes are inserted which are made of an elastic plastics material and which serve to conduct fresh air or conditioned air from a heating or air-conditioning apparatus, disposed in the middle of the cross-bearer, to the outer ends of the cross-bearer. The outer ends of the pipes are connected via connectors to air outlet openings provided in the instrument panel.

It is therefore an object of the present disclosure to improve cross-car beams in terms of size and/or manufacture.

This object is achieved by the subject matter of the independent claims. Preferred embodiments and preferred features are specified in the dependent claims and in the following description.

### Summary of the invention

The invention is defined in independent claim 1 and relates to a cross-car beam assembly for a motor vehicle with:
- a cross-car beam having a first end portion and a second end portion that are spaced apart from one another along a longitudinal axis of the cross-car beam;
- a first fixing member connected to the first end portion;
- a second fixing member connected to the second end portion;
- a hollow channel extending through the cross-car beam from the first end portion to the second end portion;
- at least a first ventilation duct that extends through a first (axial) section of the hollow channel towards the first end portion.

The cross-car beam assembly as defined in independent claim 1 further comprises at least one of the following:
a) the first fixing member axially overlaps with the first ventilation duct, wherein the first ventilation duct is at least partially received in a recess of the first fixing member and wherein the first ventilation duct extends through a first end opening in the first end portion of the cross-car beam, the first end opening connecting the hollow channel to the surroundings, and the first fixing member axially overlaps with a position of said first end opening,
b) the cross-car beam has at least one recess that comprises a mounting portion for mounting a steering wheel assembly to the cross-car beam, wherein the recess is provided by removing a portion of the outer circumferential surface of the cross-car beam to expose inner surfaces thereof.

Terms such as axial, radial and circumferential used herein may generally refer to the longitudinal axis. A radial direction may extend at an angle and in particular orthogonally to the longitudinal axis. A circumferential direction may extend about or around the longitudinal axis. Cross sections may be defined as extending orthogonally to the longitudinal axis.

With the suggested cross-car beam assembly compactness can be increased, in particular because the ventilation duct is at least partially integrated into and/or runs through the cross-car beam. This also helps to shield the ventilation duct from the surroundings and to firmly hold it in place, thereby increasing reliability. Inserting the ventilation duct into the channel may be preferable from a manufacturing point of view due to a reduced number and a reduced complexity of required manufacturing steps.

For example, the ventilation duct may be manually pushed into the hollow channel. It may be elastically deformed in this process and thus at least partially be held therein by respectively generated clamping and/or frictional forces. Of course, other or additional fixations may equally be provided, such as gluing.

Further, the cross-car beam may be cheap and simple to produce, e.g. as a hollow metallic, composite, or plastic extrusion profile having a largely constant cross-section. Providing access to the hollow channel may only require a subsequent manufacturing of through-holes which is a fast and cheap machining operation. Similarly, connections to the fixing members or to other members attached to the cross-car beam (see vertical support member or steering wheel discussed below) may only require simple insertion, machining and/or fixing measures.

The cross-car beam may be configured to extend along a width dimension of the vehicle. In particular, it may cross a longitudinal axis of the vehicle, e.g. by extending orthogonally thereto. The longitudinal axis of the vehicle may be an axis coinciding with a forward driving direction.

The cross-car beam may be a stiff member. It may comprise or be made from a metallic, plastic and/or fibre-based material, e.g. carbon-fiber or glass-fibre, or a combination of these materials.

The longitudinal axis of the cross-car beam may be a length axis and/or an axis of the largest dimension of the cross-car beam. Generally, the cross-car beam may be an elongated member.

The cross-car beam may extend between different (e.g. left and right) sides or opposite doors of the vehicle. The different sides referred to in this context may be different sides with respect to the vehicle's longitudinal axis. The fixing members may thus connect the cross-car beam e.g. to different and in particular to opposite sidewalls, door posts or pillars of the vehicle.

The fixing members may also be referred to as fixing brackets. They may be made from the same material (or type of material, e.g. metallic or plastic) as the cross-car beam.

The hollow channel may be enclosed by the cross-car beam and in particular by a tubular portion thereof. Generally, the cross-car beam may be a one-piece member. The channel may be integrally formed and/or enclosed by the cross-car beam, e.g. instead of attaching a separate tube to the actual cross-car beam. In one example, the cross-car beam comprises, at least along the majority of its length, a closed circumference. Said closed circumference may enclose the channel. Additionally or alternatively, the cross-car beam may comprise and/or integrally form at least one sidewall of the channel. For example, the channel may be an elongated and e.g. a tube-like recess extending through and being integrally formed in the cross-car beam. Accordingly, the channel may generally be an elongated cavity extending axially through the cross-car beam.

The channel may, at least along the majority of its length, be straight. It may, at least along the majority of its length, extend at a constant (vertical) height level within the beam. It may, at least along the majority of its length, run along or in parallel to the cross-car beam's longitudinal axis. It may, at least along the majority of its length, have a constant cross-section. Said cross-section may match a shape and/or size of the ventilation duct's cross-section. Generally, the cross-section of the channel may, at least along the majority of its length, be closed. It may (preferably exclusively) locally be opened when reaching any of the openings to the surroundings discussed herein.

The cross-car beam may comprise a plurality of cavities and/or channels in addition to the channel receiving the ventilation duct. The channel receiving the ventilation duct may have the largest cross-section compared to the other cavities and/or channels. It may be the only channel that is sufficiently large to receive the ventilation duct. Providing the further channels and/or cavities reduces weight.

At the first and second end portion, the channel may have open end faces. Put differently, the channel may be axially open at said first and second end portions. This may enable, according to embodiments also discussed further below, the fixing members to be at least partially inserted into the channel at said end portion.

The channel may contact the ventilation duct received therein. It may have a guiding and/or centering function with respect to the ventilation duct.

The channel may be continuous. This may include the channel being uninterrupted or unobstructed along its entire length. This may allow, at least theorectically, for pushing a member (e.g. a venitlation duct) from the first end portion all the way to the second end portion through the channel.

The first and second end portion may each comprise or be formed by an axial end face of the the cross-car beam. They may also comprise an end section of the cross-car beam having a limited length, e.g. less than 10% of the total length of the cross-car beam. The first and second end portion may e.g. comprise an opening (e.g. an end opening referred to below) through which the ventilation that may extend into the surroundings. Additionally or alternatively, they may comprise an open end face into which a respective fixing member can be inserted.

The ventilation duct may be configured to receive air from an HVAC system in order to guide it into the passenger cabin. Due to the ventilation duct extending through the hollow channel, said air may be guided through the cross-car beam. The ventilation duct may thus have an inlet portion (or inlet member) for receiving the air and an outlet portion (or outlet member) for releasing the air.

The ventilation duct may be a tube-like member. It may be a one-piece member or may comprise a number of members attached to one another, with e.g. each member forming an axial section of the ventilation duct. Preferably, however, the ventilation duct does not have more than two members (of e.g. a length above 10 cm or above 20 cm) that are received within the channel. This reduces part numbers and simplifies assembly.

In one example, only one member (e.g. forming an axial main section) of the ventilation duct extends through the channel and e.g. from one opening connecting the channel to the surroundings to another opening. These openings may be the centre opening and the end opening discussed below. At at least one of said openings (especially at the end opening), this single member may be connected to an outlet member for guiding the air into the passenger cabin. This outlet member may e.g. be angled or curved compared to an extension of the single member or any general duct member to which it is preferably directly connected. At the other opening, the single member may be connected to an inlet member for receiving air from an HVAC system. In one example, at least one of the inlet and outlet member is integrally formed with and/or pre-mounted to the single member before inserting said member into the channel.

Providing a respectively reduced number of members which form the ventilation duct simplifies mounting the ventilation duct and especially inserting it into the channel.

Inlet and outlet members of the above kind may be a general feature of the ventilation duct, independently of the configuration and number of duct sections. The inlet member may be connected to a portion of the ventilation duct remote from a respective end portion towards which said ventilation duct extends. For example, the inlet member may be connected to a portion of the ventilation duct at and/or extending towards a centre opening discussed below.

The ventilation duct may have a non-circular cross-section. It may have a horizontal dimension that exceeds its vertical dimension, thus having a generally (vertically) narrow cross-section. This may allow for dimensioning a cross-section of the hollow channel and thus of the cross-car beam in a similar narrow manner which may be preferable in terms of strength and/or compactness. As noted above, the cross-sectional shape of the ventilation duct may correspond to that of the hollow channel to e.g. produce a form-fit therebetween and to optionally slightly elastically deform the ventilation duct to produce a clamping effect.

According to a further embodiment, the cross-car beam assembly also comprises a second ventilation duct that extends through a second (axial) section of the hollow channel towards the second end portion. Preferably, the first and second axial section through which the first and second ventilation duct extend do not overlap one another. For example, the first and second ventilation duct may extend towards and/or from different centre portions and/or centre openings in the cross-car beam and towards the respective end portion. In one example, the first ventilation duct extends from a first centre opening towards the first end portion and the second ventilation duct extends from a second centre opening towards the second end portion. The first centre opening may, e.g. when viewed along the longitudinal axis, be closer to the first end portion than to the second end portion. The second centre opening may be (axially) closer to the second portion than to the first end portion.

By providing respectively separate first and second ventilation ducts, individual air streams may be provided to a left and right side of a passenger cabin. Generally, any disclosure concerning the first ventilation duct may equally apply to the second ventilation duct. Specifically, the first and second ventilation duct may be configured identically to one another, apart from their orientation, position and/or extension within and through the cross-car beam assembly. In one example, the first and second ventilation duct mirror symmetric to one another, e.g. with reference to a centre plane extending orthogonally to the longitudinal axis and/or being located at an axial centre position of the cross-car beam.

In one example, the elongated cross-car beam is an extrusion profile. This may result in a straight shape of the cross-car beam and/or in a constant cross-section of the cross-car beam across the whole length of the cross-car beam. Yet, this (at least initially) constant cross-section may locally deviate due to, after initial production of the extrusion profile, performing subsequent machining operations. For example, through-holes are cut-out may be introduced to provide the various openings discussed herein. This may result in locally interrupting and/or opening the otherwise closed-cross-section and in particular a closed circumferential surface of the cross-section.

Similarly, cut-outs may be provided of e.g. at least the outer circumferential surface of the cross-car beam to locally expose inner surfaces. This may be done to provide local spaces for receiving and/or for mounting further members to the cross-car beam, such as a steering wheel assembly discussed below.

According to preferred example, the first and second fixing member are at least partially received in the cross-car beam, in particular within the hollow channel. For example, they may at least partially be axially inserted into the cross-car beam and in particular into the hollow channel. If not received in the hollow channel receiving the ventilation duct, the fixing members may be received in another cavity, recess and/or channel that is accessible at or from an end face of the cross-car beam at which the respective fixing member is to be mounted.

This may increase compactness of the overall cross-car beam assembly, e.g. compared to attaching the fixing member to an outside of the cross-car beam. Generally, no respective external connection between the cross-car beam and the fixing members may be formed, i.e. the letter may not be attached to an outer circumferential surface or shell of the cross-car beam. Also, this may improve stability due to the hollow cross-section of the cross-car beam being at least partially filled and thus strengthened by the fixing member.

The length of the section of each fixing member that is received in the cross-car beam may amount to several centimetres, in particular to more than 10 cm. This may increase stability of the formed connection.

Inserting at least part of each fixing member into the cross-car beam may include providing an axial overlap between these members and/or a form fit therebetween. Additionally or alternatively, frictional forces may be produced to secure each fixing member to the cross-car beam. If fixing elements that would project into the inner volume of the ventilation ducts are avoided, the air flow inside the ducts is subjected to less disturbance, so that more flow rate is possible for the same energy requirement, and with less chance of increasing flow noise. In one example, an additional fixation, e.g. by gluing, welding or by mechanical means, such as by screws, may be provided between each fixing member and cross-car beam.

The fixing members may have at least one axial insertion portion to be inserted into the cross-car beam. They may have at least one mounting portion from mounting the fixing member (and thus the cross-car being connected thereto) to the vehicle chassis, in particular to a door pillar. The mounting portion may extend at an angle to the axial insertion portion, in particular at an angle that is larger than 20° or larger than 60°. In one example, the mounting portion and axial insertion portion substantially extend orthogonally to one another. This increases axial compactness of the fixing member and allows for placing the cross-car beam (in particular its axial end portions) particularly close to the vehicle chassis. This can help to maximise the length of the cross-car beam, which may be preferable in terms of stability, thanks to the reduced offset from the fixing bracket to the beginning of the beam profile.

According to the above-quoted option a) of independent claim 1, the first fixing member axially overlaps with the first ventilation duct. Additionally, the second fixing member may axially overlap with the second ventilation duct. This way, the respective fixing member may provide a stiffening function near or at the first ventilation duct. This may be preferable because the ventilation ducts may change their direction near or within the respective end portion. For example, they may at least partially extend out of or away from the hollow channel. The fixing members may thus provide at least an indirect support for the ventilation duct to compensate for the reduced support by the hollow channel.

Additionally or alternatively, the fixing members may generally contact the respective one of the first and/or second ventilation duct. They may act as an axial stop member for the ventilation duct to secure its axial position e.g. within the hollow channel.

According to the above-quoted option a) of independent claim 1, the first ventilation duct is at least partially received in a recess of the first fixing member. Additionally, the second ventilation duct may at least partially received in a recess of the second fixing member. The recess may be shaped and/or dimensioned to e.g. clamp and/or at least partially surround and outer circumference of the first ventilation duct (e.g. at least one third or at least half of said circumference). Accordingly, the recess may be notch-shaped, e.g. V-shaped, or edged. Alternatively, the recess may have a rounded shape, e.g. a half-circular shape. Generally, the shape of the recess may match a shape of the outer circumference of a received portion of the ventilation duct.

According to the above-quoted option a) of independent claim 1, the first ventilation duct extends through a first end opening in the first end portion of the cross-car beam, the first end opening connecting the hollow channel to the surroundings. The first fixing member axially overlaps with a position of said first end opening. Additionally, the second ventilation duct may extend through a second end opening in the second end portion of the cross-car beam that connects the hollow channel to the surroundings and the second fixing member axially overlaps with a position of the second end opening.

In this context, it may further be provided that the first end opening and/or the second end opening have a shape that matches a shape of the recess in the respectively associated first or second fixing member. For example, the recess may extend along edge portions of the opening and/or may be shaped congruently to said opening and/or may at least partially surround said opening. Preferably, however, the opening is not obstructed by the recess. Thus, in particular when viewed from above, a shape of the recess and of the opening may at least partially match. This may provide a particularly reliable stabilisation by the respective fixing member that compensates for the structural weakening in the cross-car beam resulting from the end opening.

Generally, each fixing member may support a respective end portion (in particular sections of an end portion that form edge portions of a respective end opening), by contacting the end portion from inside. Specifically, an axial insertion portion of each fixing member may contact an inner surface of a respective end portion. Said axial insertion portion may generally comprise the above recess.

At least a section of any ventilation duct disclosed herein may comprise or be formed of a material that is softer and/or more flexible than a material of the cross-car beam. This may allow for inserting the ventilation duct (or at least sections thereof) into the channel while e.g. elastically deforming said section. For example, the ventilation duct may comprise or be formed of a plastic material and in particular a plastic tubular member. When comprising a plurality of duct sections, these may be connected to one another by forming snap-connections and/or by partially inserting the duct sections into one another and/or bringing them into engagement with one another.

In one example, the ventilation duct may be a continuous one-piece or multi-piece member that e.g. defines a closed channel or tube that is arranged within the hollow channel of the cross-car member. In another example, the ventilation duct may at least along part of its length be formed and/or confined by sidewalls of the hollow channel. In that case, the ventilation duct may comprise duct sections, in particular forming input or output members discussed herein, that abut against an inner sidewall of the hollow channel. Yet, they are not necessarily connected to one another, thereby leaving an axial section of said sidewall exposed. Put differently, the hollow channel may confine or form at least a (axial) section of the ventilation duct.

According to one embodiment, the ventilation duct comprises at least one of the inlet member or outlet member that is at least partially inserted into an opening from an outside of the cross-car beam, e.g. into an end opening or centre opening. Said inlet member or outlet member may comprise stop surfaces that limit its insertion depth, e.g. by having at least one dimension exceeding a diameter of the respective opening. The inlet member or outlet member may be connected to at least one inner duct section formed by a respective separate duct member. Alternatively, they may be fluidically connected (i.e. connected so as to enable a continuous a fluidic conduction) by the hollow channel and/or by a coating or casting material provided in the hollow channel.

According to a further embodiment, the first ventilation duct comprises a first duct section and a second duct section that are connected to one another near or at (e.g. within) the first end portion. The duct sections referred to in this disclosure may generally be formed as distinct duct members that are e.g. inserted into the hollow channel. Similarly, the second ventilation duct may comprise a first duct section and a second duct section that are connected to one another near or at the second end portion. One of the first and second duct section may be an outlet member e.g. extending into and/or for guiding air into a passenger cabin. The other may form a main section of the respective ventilation duct, said main section extending through the hollow channel and/or comprising a largest share of the length of the respective ventilation duct.

One of the first and second duct section may largely or fully be located outside of the channel and/or at an outside of the cross-car beam. The other of the first and second duct section may largely or fully be received in the hollow channel and/or on an inside of the cross-car beam. The first and second duct section may be aligned with and/or may be arranged to enclose an end opening in the respective end portion. When connected, air may flow in between the first and second duct section and through said end opening.

Connecting a respective first and second duct section near or at a respective end portion may reduce manufacturing complexity. Also, it may reduce the overall number of required duct sections. For example, one of the first and second duct section (that e.g. forms a main section discussed above) may be pushed through the hollow channel and towards an end portion and may be aligned with a respective end opening in said end portion. Afterwards, the respective other of the first and second duct section may be connected to said aligned portion of the inserted duct section from outside the cross-car beam. Generally, connecting the duct sections to one another may include forming a snap-in and/or a clamping connection by pushing the duct sections against one another.

Note that a similar connection may be provided to an even further duct section e.g. forming an inlet member and/or a connecting section to an HVAC system. This further duct section may e.g. be connected to a main section discussed above at a centre opening of the cross-car beam.

Specifically, according to a further embodiment, the cross-car beam has a first center opening connecting the hollow channel to the surroundings. The centre opening may be closer to an (axial) centre of the cross-car beam than to one of its end portions. For example, it may be located at a distance to an axial centre of the cross-car beam that does not amount to more than 20% or more than 10% of the total length of the cross-car beam. This helps to increase a distance of the centre opening to an end portion of the cross-car beam and thus increases the length along which a ventilation duct can be guided through the cross-car beam.

In one example, the first duct section (e.g. forming a main section as discussed above) of the first ventilation duct extends from the first center opening towards the first end portion and in particular up to an optional end opening provided thereat. At least one of the centre opening and the end opening may be sized so that the ventilation duct (or at least its first duct section) may be inserted therethrough into the hollow channel.

Similarly, the cross-car beam may have a second center opening connecting the hollow channel to the surroundings. A first duct section (in particular forming a main section as discussed above) of the second ventilation duct may extend from the second center opening to the second end portion. The second centre opening may be generally positioned similar to the first centre opening, but on an opposite side of an axial centre of the cross-car beam. In one example, both centre openings and/or both end openings are arranged mirror symmetric with respect a symmetry plane extending orthogonally to the longitudinal axis and/or through an axial centre of the cross-car beam.

According to the above-quoted option b) of independent claim 1, the cross-car beam has at least one section and specifically at least one recess that comprises a mounting portion for mounting a steering wheel assembly to the cross-car beam. Said mounting portion may e.g. comprise or be a planar section. This may deviate from a generally rounded and/or nonplanar circumferential surface of the cross-car beam. The recess is provided by removing a portion of the outer circumferential surface of the cross-car beam to expose inner surfaces thereof. Said inner surfaces may provide and from the mounting portion.

In other words, the cross-car beam may have at least one section having an outer shell (or outer circumferential surface) and at least one (e.g. axially extending) inner surface surrounded by the shell, wherein the recess comprises (or, put differently, is formed by providing) a local cut-out in the shell, so that the inner surface is locally exposed, i.e. is accessible from outside.

Providing a respective recess allows for efficiently (e.g. at a limited manufacturing effort) attaching further members, such as a steering wheel assembly, to the cross-car beam while reliably supporting them.

In this context, it may be provided that the hollow channel axially overlaps with the recess. Yet, the hollow channel may remain separated from the recess, i.e. the recess may not extend into the hollow channel. For example, at least one sidewall portion and/or surface section may remain that separates the recess and the hollow channel. This underlines the generally increased compactness that is achievable with the present solution, because the ventilation duct and a member externally attached to the cross-car beam can be positioned close to one another.

According to a further embodiment, the cross-car beam assembly further comprises at least one vertical support member (or vertical support). Said vertical support member may e.g. be a beam, a column, a pillar and/or a plastic or metallic profile, in particular an extrusion profile. The vertical support member may support the cross-car beam relative to and/or with respect to a vehicle floor. Put differently, it may provide a vertical connection between the cross-car beam and the vehicle floor, so that the cross-car beam may rest against the vehicle floor. The vertical support member can, but does not have to be, vertically upright. For example, it may extend at an angle to the vertical axis, but generally along said vertical axis and e.g. cover a vertical distance.

It may be provided that the vertical support member is positioned closer to one of the first and second center openings than to any of the first and second end portion. Put differently, the vertical support member may be connected to the cross-car beam closer to its axial centre than to one of its end portions. For example, it may be connected to the cross-car beam at a position whose distance from the axial centre of the cross-car beam does not amount to more than 10% or more than 20% of the total axial length of the cross-car beam.

This allows for a vertical support near the axial centre of the cross-car beam and specifically near optional centre openings provided thereat. Thus, the structural weakening introduced into the cross-car beam by said optional centre openings can at least partially be compensated for by the vertical support member.

In one example, two vertical support members are provided. Each one is positioned adjacent two and/or axially overlapping with one of the centre openings. The vertical support members may extend at an angle to one another, so as to together e.g. define a V-type shaped.

According to a further aspect and as discussed above, a cross-sectional shape of the cross-car beam is constant along at least half or along at least three quarters of its length.

Additionally or alternatively, a cross-sectional shape of the cross-car beam may have a smaller vertical dimension compared to a horizontal dimension thereof. This may result in a vertically narrow shape. For example, the cross-sectional shape may generally be oval, rounded and/or polygonal. Preferably a vertical dimension of said shape is smaller than a horizontal dimension. The horizontal dimension may e.g. be a depth dimension extending orthogonally to the longitudinal axis and/or within a cross-sectional plane of the cross-car beam.

### Brief description of the drawings

For a better understanding of embodiments of the invention and to show how the same may be carried into effect, reference will now be made, purely by way of example, to the accompanying drawings in which like numerals designate corresponding elements or sections throughout.
- Fig. 1: shows a cross-car beam comprised by a cross-car beam assembly according to a first embodiment of the invention.
- Fig. 2: shows a further view of the cross-car beam assembly according to the first embodiment.
- Figs. 3 and 4: show alternative designs of the ventilation duct in the first embodiment.
- Fig. 5 to 9: show different views of a cross-car beam assembly according to a second embodiment.

### Detailed description of the drawings

Various examples of embodiments of the present invention will be explained in more detail by virtue of the following embodiments illustrated in the figures and/or described below.

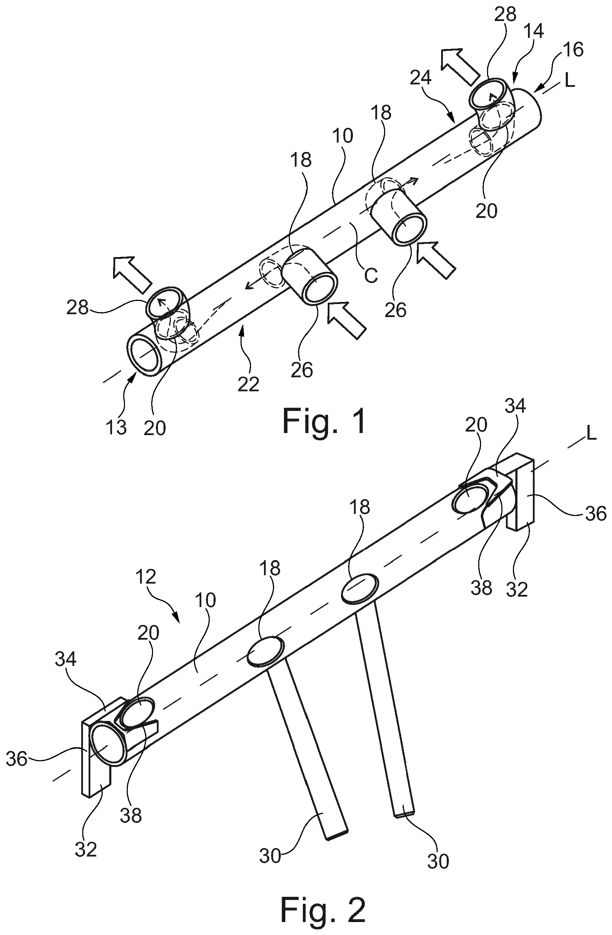

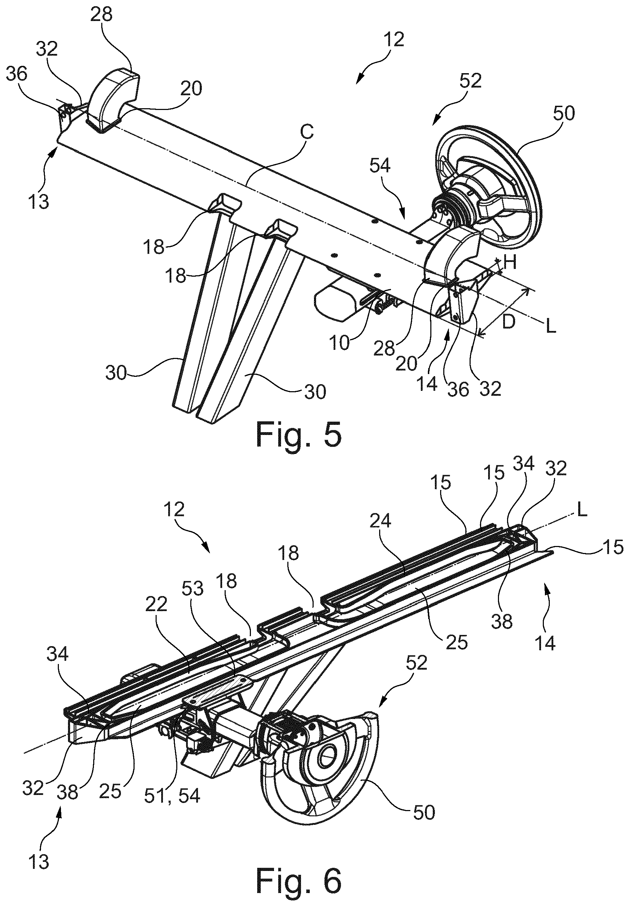

Figure 1 shows a cross-car beam 10 comprised by a cross-car beam assembly 12 which is shown in greater detail in Figure 2. The cross-car beam 10 is an elongated tubular member extending with an optional straight course along a longitudinal axis L. Merely as an example, it is depicted with a circular cross-section. The cross-section is constant along the complete length of the cross-car beam 10. An orientation of the cross-car beam 10 within a non-depicted vehicle is identical to an orientation of the cross-car beam discussed in connection with the second embodiment of figures 5-9.

Accordingly, a side of the cross-car beam 10 facing the viewer is oriented towards a front of the motor-vehicle. A side facing away from the viewer is oriented towards the front seats.

The cross-car beam 10 comprises a first axial end portion 13 and a second axial end portion 14, which each comprise an axial end face of the cross-car beam 10. In the depicted case, these end faces are open, so that the inner hollow portion of the cross-car beam 10 is accessible from outside.

Said inner hollow portion defines a hollow channel 16 extending in between the axial end portions 13, 14 and specifically from one end portion to the other. The hollow channel 16 has, similar to the cross-car beam 10, a continuous cross-section. Generally, the hollow channel 16 is a continuous and unobstructed channel extending straight along the longitudinal axis L.

The cross-car beam 10 has a number of openings 18, 20 or, with other words, apertures. The openings 18, 20 are through-holes and/or cut-outs in an outer circumferential surface of the cross-car beam 10. They connect the hollow channel 16 (or generally the inside of the cross-car beam 10) to the outside. This connection may in particular include a fluidic connection so that air may be exchanged between the inside and the outside of the cross-car beam 10.

Specifically, the cross-car beam 10 comprises two centre openings 18 that are located close to and at both sides of an axial centre C. Further, it comprises two end openings 20 that are provided adjacent to and/or within each of the end portions 13, 14.

As indicated by respective arrows in figure 1, air is guided from each centre opening 18 to a respectively axially closest end opening 20. Specifically, a first ventilation duct 22 extends between the left end opening 20 and the left centre opening 18 in figure 1, whereas a second ventilation duct 24 extends from a right centre opening 18 to a right end opening 20.

At least one axial section of each ventilation duct 22, 24 is enclosed and/or formed by a section of the channel 16 of the cross-car beam 10. On the other hand, each ventilation duct 22, 24 comprises duct sections formed by distinct duct members that are at least partially inserted into the inner channel 16. More precisely, each ventilation duct 22, 24 comprises an inlet member 26 that is at least partially inserted into a respective centre opening 18. Further, each ventilation duct 22, 24 comprises an outlet member 28 that is at least partially inserted into the respective end opening 20. In consequence, the air guided through each ventilation duct 22, 24 is also guided through each of the inlet member 26 and outlet member 28 of a respective ventilation duct 22, 24.

The inlet members 26 and outlet members 28 are each made of a flexible material. They can be elastically deformed when inserted into a respective opening 18, 20 so as to be elastically secured therein. Further, the inserted portions may be pressed into and against a surrounding cross-section of the hollow channel 16, so as to provide an at least partially airtight sealing.

The inlet members 26 may be directly or indirectly connected to an HVAC system of the vehicle. The outlet members 28 may be directly or indirectly connected to vents or to other air outlets within a passenger cabin.

Figure 2 shows the cross-car beam 10 of figure 1 as part of a cross-car beam assembly 12. For illustrative purposes, the inlet and outlet members 26, 28 are not depicted in figure 2 but are nonetheless comprised by the cross-car beam assembly 12.

Compared to figure 1, two vertical supports 30 are additionally provided. These connect the cross-car beam 10 to a portion of the vehicle chassis below of the beam 10. Thus, the vertical supports 30 support the cross-car beam 10 with respect to and/or against a vehicle floor.

For compensating for the structural weakening introduced by the centre openings 18, the vertical supports 30 are connected to the cross-car beam 10 close to or at axial positions of the centre openings 18 (but e.g. slightly below of said openings 18). This may be equivalent to each vertical support 30 overlapping with one of the centre openings 18.

Further, in order to compensate for the structural weakening introduced by the end openings 20, fixing members 32 are provided and are axially inserted into the open end faces of the respective first and second end portion 13, 14. The fixing members 32 each comprise an axial insertion portion 34 as well as a mounting portion 36 extending at an angle and in particular orthogonally thereto. By means of said mounting portions 36, the cross-car beam assembly 12 can be mounted to opposite doorposts or door pillars of the vehicle chassis.

The axial insertion portions 34 each comprise a recess 38 extending along at least part of the outer edges of a respectively adjacent end opening 20, but preferably not obstructing it. This further increases a strengthening effect. Also, a respectively adjacent outlet member 28 or any other duct section may at least partially be received in and/or supported by each recess 38.

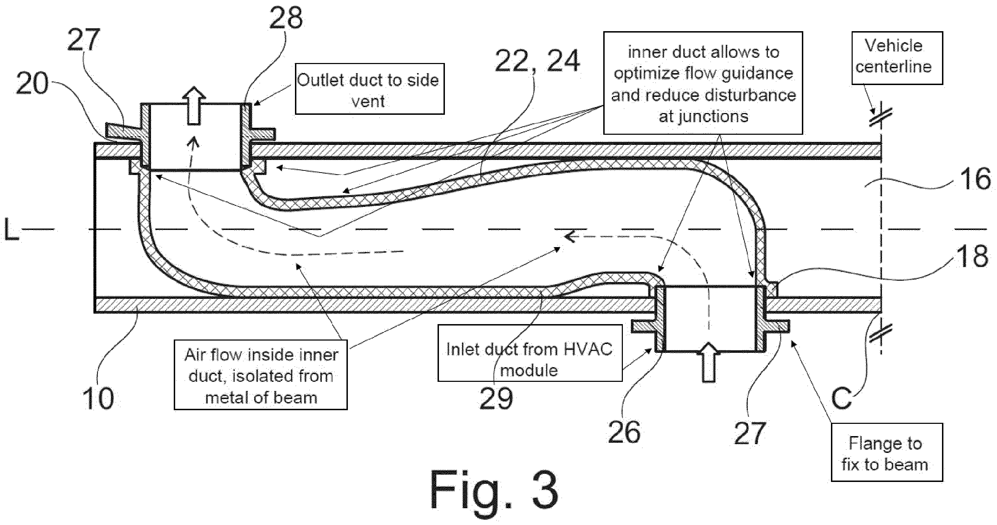

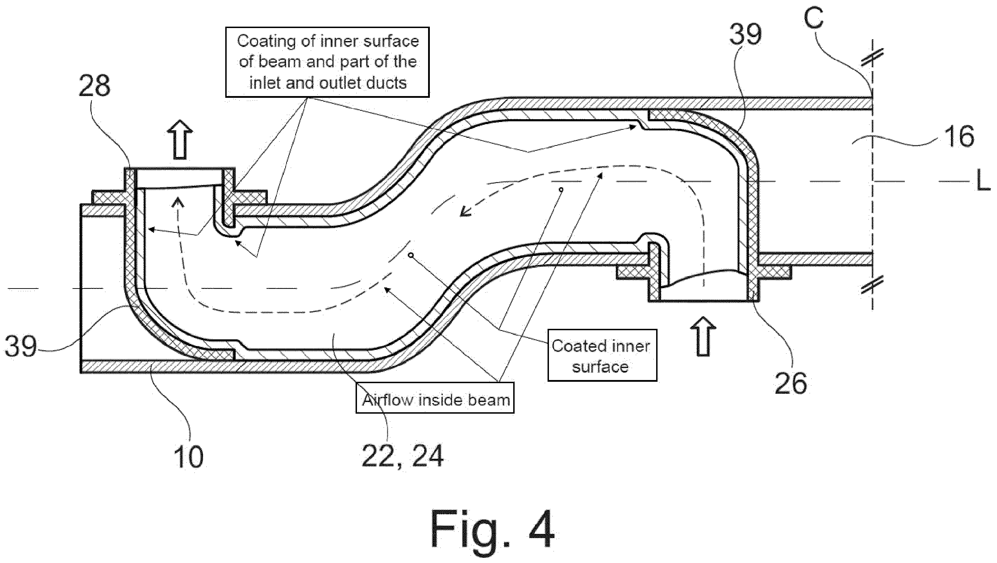

Figures 3 and 4 show alternative configurations of any of the ventilation ducts 22, 24. These configurations may be implemented independently of the further details of the first and second embodiment disclosed herein. They may be combined with any of the further features and embodiments of this disclosure. Figures 3 and 4 each show sectional views with a sectional plane comprising the longitudinal axis L.

In figure 3, an inlet member 26 and outlet member 28 of a ventilation duct 22, 24 can again be seen. They each comprise a flange portion 27 having a diameter exceeding that of a respective centre opening 18 and end opening 20 in which the inlet and outlet member 26, 28 are received. Accordingly, the flange portions 27 act as stop surfaces limiting an insertion depth of the inlet and outlet member 26, 28 into the cross-car beam 10. Note that an axis of symmetry extending through an axial centre C is shown in both of figures 3 and 4. The depicted configurations are mirror symmetric with respect to said axis of symmetry.

In the shown configuration, the inlet and outlet member 26, 28 do not extend all the way to an opposite sidewall of the hollow channel 16. Instead, they are each connected to a connecting duct section or duct member 29, e.g. by being at least partially inserted therein.

The connecting duct member 29 may e.g. be inserted into the channel 16 from an open end face of an axial end portion 13, 14, so as to be aligned with the respective openings 18, 20.

Merely as an example, figure 4 depicts a cross-car beam10 having a non-straight course, but the depicted configuration of the ventilation duct 22, 24 is not limited thereto. As a difference compared to the configuration of figure 3, a duct section connecting the inlet and outlet member 26, 28 is not provided as a separate stand-alone and insertable duct member. Instead, this connecting section is formed by a coating and/or casting material at the inner sidewalls of the hollow channel 16. For example, in particular after having inserted the inlet and outlet member 26, 28, the coating or moulding mass may be filled into the hollow channel and e.g. a centrifugal or rotational or blow moulding and/or moulding with a removable moulding core may be performed.

Note that as a mere option, the inlet and outlet member 26, 28 each comprise radially extending sections 39 extending to a respectively opposite inner side wall portion of the hollow channel 16, just like in figure 1.

In the following, a cross-car beam assembly 12 according to a second embodiment will be described by largely making use of the same reference signs introduced with respect to the first embodiment.

Figure 5 shows a perspective view of the cross-car beam assembly 12 with a side facing a front side of the vehicle facing the viewer (see respective orientation of a steering wheel 50 mounted to the cross-car beam assembly 12).

The cross-car beam 10 has a narrow the cross-section, with a horizontal depth D exceeding a vertical height H. Again, said cross-section is (at least initially, i.e. before providing the various openings 18, and 20 there in and/or an optional mounting portion 54 for the steering wheel assembly 52) constant along the complete length of the cross-car beam 10. The cross-car beam 10 is configured as a metallic extrusion profile.

The cross-car beam 10 again comprises two centre openings 18 near its axial centre C which, in the shown example, facing a front side of the vehicle. In consequence, from a driver's perspective, the centre openings 18 are provided at a rear side of the cross-car beam 10.

Also, at its axial end portions 13, 14, end openings 20 are provided. In the shown example, these are obstructed by outlet members 28 inserted therein. Further, similar to the first embodiment, the cross-car beam 10 has open axial end faces into which fixing members 32 are axially inserted. In the depicted inserted state, only an external mounting portion 36 of each fixing member 32 can be seen.

Still further, the vertical supports 30 are shown which again axially overlap with the centre openings 18.

Figure 6 is a sectional view of the cross-car assembly 12 of figure 5 with the steering wheel 50 facing the viewer. The cross-sectional plane extends horizontally and comprises the longitudinal axis L. Accordingly, the cross-car beam 10 is horizontally cut in half. Members inserted therein and/or connected thereto are equally depicted in a respectively cut manner. One can see that the cross-car beam 10 comprises a number of axially continuous channels 15, the largest one of which corresponding to the hollow channel 16 of figure 1. The channels 15 are separated from one another by axial inner surfaces or axially extending sidewalls resulting from the extrusion process. Overall, the cross-car beam 10 thus has a light but stable structure.

It can again be seen that ventilation ducts 22, 24 extend from the centre openings 18 towards a respectively closest axial end portion 13, 14. In said end portions 13, 14, the ventilation ducts 22, 24 are received in recesses 38 of the axial insertion portions 34 of each respective fixing member 32.

In the depicted example, each ventilation duct 22, 24 comprises a main duct section 25 that may e.g. correspond to a connecting duct member 29 according to figure 3. An inlet member connected to said main duct section 25 is not depicted but may be inserted into each one of the centre openings 18. The main duct sections 25 each extend so as to align with and/or open out into an end opening 20 of a respective axial end portion 13, 14. Said end openings 20 are not visible in figure 6. Yet, figure 6 shows that the ventilation ducts 22, 24 taper within the respective axial end portions 12, 14 to fit into the recesses 38 of the fixing members 32. This results in a trapezoidal shape of the ventilation ducts 22, 24 near the end openings 20. As evident from figure 5 and indicated by the congruent connecting portions of the outlet member 28, the end openings 20 thus have a matching trapezoidal shape as well.

Further, figure 6 shows the mounting portion 54 that is provided by forming a recess 51 in the outer circumferential surface of the cross-car beam 10. Specifically, at a lower portion or lower edge of the cross-car beam 10, a portion of the outer circumferential surface of the cross-car beam 10 is removed. Thus, an in figure 6 radially outermost or front channel 15 is locally opened, so that normally inner surfaces of the cross-car beam 10 are locally exposed. To these surfaces, which may form or be comprised by the mounting portion 54, the steering wheel assembly 52 may be fixed, e.g. by screws.

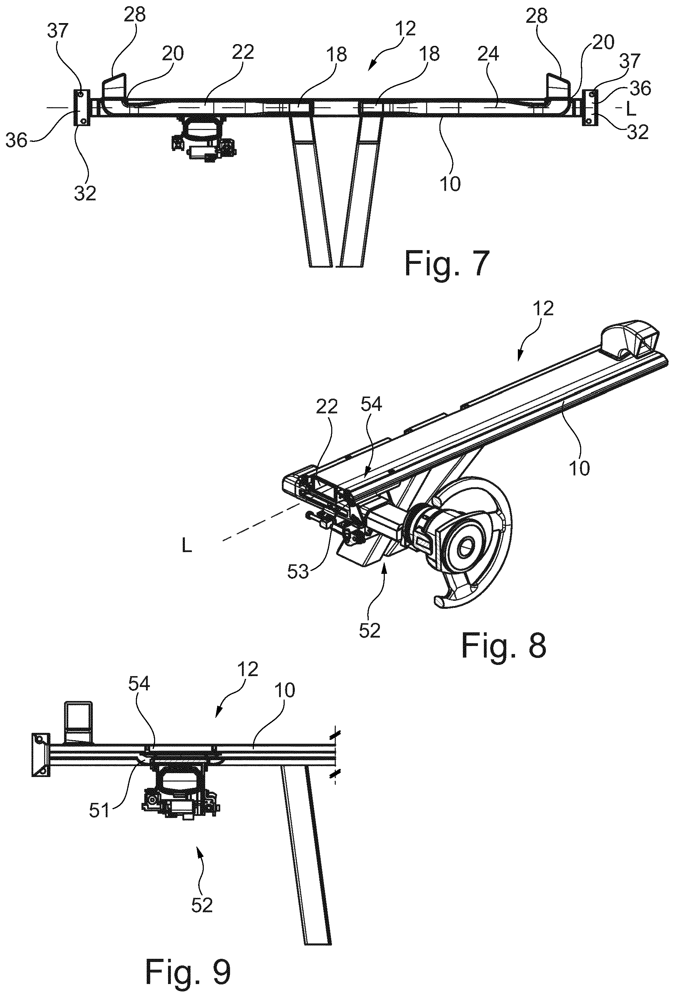

An optional mounting flange 53 of the steering wheel assembly 52 that may contact the mounting portion 54 is shown in figure 6. In figure 8, a state is shown in which said mounting flange 53 is mounted to and in particular contacts the mounting portion 54. From figure 9, the recess 51 exposing the otherwise inner surfaces can particular clearly be seen.

Figure 7 shows a front view of the cross-car beam assembly 12 (i.e. a view from the driver's perspective). Again, the cross-car beam 10 is depicted in a cross-sectional view with, in this case, the cross-sectional plane extending vertically and including the longitudinal axis L.

From figure 7, the extension of the ventilation ducts 22, 24 becomes particularly clear. Further, a positioning of the outlet members 28 above and aligned with the end openings 20 is shown. Still further, the mounting portions 36 of the fixing members 32 are arranged parallel to an image plane, but face away from the viewer in figure 7. Nonetheless, it can be seen that the mounting portions each comprise insertion holes 37 for inserting screws therethrough.

Figure 8 shows the cross-car beam assembly 12 according to the second embodiment in a further sectional view with the sectional plane extending vertically and orthogonally to the longitudinal axis L. Merely as an example, this sectional plane is positioned close to the steering wheel assembly 52 and intersects the mounting portion 54. It can be seen that one of the ventilation ducts 22 axially overlaps with said mounting portion 54, or, in other words, extends in a same axial section of the cross-car beam 10 as said mounting portion 54.

Figure 9 is a partial front view of the left half of the cross-car beam assembly 12 with the cross-car beam 10 being depicted in a non-sectioned manner. In this case, the recess 51 for providing the mounting portion 54 can be seen particularly clearly.

### List of reference signs

- 10: Cross-car beam
- 12: Cross-car beam assembly
- 13, 14: First and second axial end portion
- 15: Axially continuous channel
- 16: Hollow channel
- 18: Centre opening
- 20: End opening
- 22,24: Ventilation duct
- 25: Main section
- 26: Inlet member
- 27: Flange portion
- 28: Outlet member
- 29: Connecting member
- 30: Vertical support
- 32: Fixing member
- 34: Axial insertion portion
- 36: Mounting portion
- 37: Insertion hole
- 38: Recess (in fixing member)
- 39: Radially extending section
- 50: Steering wheel
- 51: Recess (in cross-car beam)
- 52: Steering wheel assembly
- 53: Flange portion (of steering wheel assembly)
- 54: Mounting portion
- C: Axial center
- D: Depth
- H: Height
- L: Longitudinal axis

## Claims

1. A cross-car beam assembly (12) for a motor vehicle, with:
- a cross-car beam (10) having a first end portion (13) and a second end portion (14) that are spaced apart from one another along a longitudinal axis (L) of the cross-car beam (10),
- a first fixing member (32) connected to the first end portion (13);
- a second fixing member (32) connected to the second end portion (14);
- a hollow channel (16) extending through the cross-car beam (10) from the first end portion (13) to the second end portion (14);
- a first ventilation duct (22) that extends through a first section of the hollow channel (16) towards the first end portion (13),
**characterized in that** at least one of the following is further provided:
a) wherein the first fixing member (32) axially overlaps with the first ventilation duct (22), wherein the first ventilation duct (22) is at least partially received in a recess (38) of the first fixing member (32) and wherein the first ventilation duct (22) extends through a first end opening (20) in the first end portion (13) of the cross-car beam (10), the first end opening (20) connecting the hollow channel (16) to the surroundings, and the first fixing member (32) axially overlaps with a position of said first end opening (20),
b) the cross-car beam (10) has at least one recess (51) that comprises a mounting portion (54) for mounting a steering wheel assembly (52) to the cross-car beam (10), wherein the recess (51) is provided by removing a portion of the outer circumferential surface of the cross-car beam (10) to expose inner surfaces thereof.

2. The cross-car beam assembly (12) according to alternative a) of claim 1,
wherein the cross-car beam (10) is a one-piece member.

3. The cross-car beam assembly (12) according to claim 1 or 2,
further comprising: a second ventilation duct (24) that extends through a second section of the hollow channel (16) towards the second end portion (14).

4. The cross-car beam assembly (12) according to any of the previous claims,
wherein the cross-car beam (10) is an extrusion profile.

5. The cross-car beam assembly (12) according any of the previous claims,
wherein the first and second fixing member (32) are at least partially received in the cross-car beam (10), in particular in the hollow channel (16).

6. The cross-car beam assembly (12) according any of the previous claims with alternative a) of claim 1,
wherein the first fixing member (32) acts as an axial stop member for the first ventilation duct (22) to secure its axial position.

7. The cross-car beam assembly (12) according to any of the previous claims with alternative a) of claim 1,
wherein the first end opening (20) has a shape that matches a shape of the recess (38) in the first fixing member (32).

8. The cross-car beam assembly (12) to claim 7,
wherein the recess (38) extends along edge portions of the first end opening (20) and/or is shaped congruently to said first end opening (20) and/or at least partially surrounds said first end opening (20).

9. The cross-car beam assembly (12) according to any of the previous claims,
wherein the first ventilation duct (22) comprises a first duct section (25) and a second duct section (28) that are connected to one another near the first end portion (13).

10. The cross-car beam assembly (12) according to claim 9,
wherein the cross-car beam (10) has a first center opening (18) connecting the hollow channel (16) to the surroundings and the first duct section (25) of the first ventilation duct (22) extends from the first center opening (18) to the first end portion (13).

11. The cross-car beam assembly (12) according to any of the previous claims with alternative b) of claim 1,
wherein the hollow channel (19) axially overlaps with the recess (51) comprising the mounting portion (54).

12. The cross-car beam assembly (12) according to any of the previous claims with alternative b) of claim 1,
wherein the cross-car beam (10) has at least one section having an outer shell and further has at least one inner surface surrounded by the shell, wherein the recess (51) comprises or is formed by a local cut-out in the shell, so that the inner surface is locally exposed.

13. The cross-car beam assembly (12) according to any of the previous claims and claim 10, the cross-car beam assembly (12) further comprising at least one vertical support member (30) supporting the cross-car beam (10) with respect to a vehicle floor, the vertical support member (30) being positioned closer to the first center opening (18) than to any of the first and second end portion (13, 14).

14. The cross-car beam assembly (12) according to any of the previous claims,
wherein a cross-sectional shape of the cross-car beam (10) is constant along at least half or at least three quarters of its length.

15. The cross-car beam assembly (12) according to any of the previous claims,
wherein a cross-sectional shape of the cross-car beam (10) has a smaller vertical dimension compared to a horizontal dimension thereof.

## Patentansprüche

1. Cockpitquerträgerbaugruppe (12) für ein Kraftfahrzeug, mit:
- einem Cockpitquerträger (10) mit einem ersten Endabschnitt (13) und einem zweiten Endabschnitt (14), die entlang einer Längsachse (L) des Cockpitquerträgers (10) voneinander beabstandet sind,
- einem ersten Befestigungselement (32), das mit dem ersten Endabschnitt (13) verbunden ist;
- einem zweiten Befestigungselement (32), das mit dem zweiten Endabschnitt (14) verbunden ist;
- einem Hohlkanal (16), der sich durch den Cockpitquerträger (10) vom ersten Endabschnitt (13) zum zweiten Endabschnitt (14) erstreckt;
- einer ersten Lüftungsleitung (22), die sich durch einen ersten Abschnitt des Hohlkanals (16) in Richtung des ersten Endabschnitts (13) erstreckt,
**dadurch gekennzeichnet, dass** ferner mindestens eines der Folgenden vorgesehen ist:
a) wobei sich das erste Befestigungselement (32) axial mit der ersten Lüftungsleitung (22) überlappt, wobei die erste Lüftungsleitung (22) zumindest teilweise in einer Aussparung (38) des ersten Befestigungselements (32) aufgenommen ist und wobei sich die erste Lüftungsleitung (22) durch eine erste Endöffnung (20) in dem ersten Endabschnitt (13) des Cockpitquerträgers (10) erstreckt, wobei die erste Endöffnung (20) den Hohlkanal (16) mit der Umgebung verbindet, und sich das erste Befestigungselement (32) axial mit einer Position der ersten Endöffnung (20) überlappt,
b) der Cockpitquerträger (10) mindestens eine Aussparung (51) aufweist, die einen Montageabschnitt (54) zum Montieren einer Lenkradbaugruppe (52) an dem Cockpitquerträger (10) umfasst, wobei die Aussparung (51) durch Entfernen eines Abschnitts der Außenumfangsfläche des Cockpitquerträgers (10) bereitgestellt wird, um Innenflächen davon freizulegen.

2. Cockpitquerträgerbaugruppe (12) nach Alternative a) von Anspruch 1,
wobei der Cockpitquerträger (10) ein einstückiges Element ist.

3. Cockpitquerträgerbaugruppe (12) nach Anspruch 1 oder 2,
ferner umfassend: eine zweite Lüftungsleitung (24), die sich durch einen zweiten Abschnitt des Hohlkanals (16) in Richtung des zweiten Endabschnitts (14) erstreckt.

4. Cockpitquerträgerbaugruppe (12) nach einem der vorhergehenden Ansprüche,
wobei der Cockpitquerträger (10) ein Strangpressprofil ist.

5. Cockpitquerträgerbaugruppe (12) nach einem der vorhergehenden Ansprüche,
wobei das erste und das zweite Befestigungselement (32) zumindest teilweise in dem Cockpitquerträger (10), insbesondere in dem Hohlkanal (16), aufgenommen sind.

6. Cockpitquerträgerbaugruppe (12) nach einem der vorhergehenden Ansprüche mit Alternative a) von Anspruch 1,
wobei das erste Befestigungselement (32) als axiales Anschlagelement für die erste Lüftungsleitung (22) wirkt, um deren axiale Position zu sichern.

7. Cockpitquerträgerbaugruppe (12) nach einem der vorhergehenden Ansprüche mit Alternative a) von Anspruch 1,
wobei die erste Endöffnung (20) eine Form aufweist, die zu einer Form der Aussparung (38) in dem ersten Befestigungselement (32) passt.

8. Cockpitquerträgerbaugruppe (12) nach Anspruch 7,
wobei sich die Aussparung (38) entlang von Randabschnitten der ersten Endöffnung (20) erstreckt und/oder kongruent zu der ersten Endöffnung (20) geformt ist und/oder die erste Endöffnung (20) zumindest teilweise umgibt.

9. Cockpitquerträgerbaugruppe (12) nach einem der vorhergehenden Ansprüche,
wobei die erste Lüftungsleitung (22) einen ersten Leitungsabschnitt (25) und einen zweiten Leitungsabschnitt (28) umfasst, die nahe dem ersten Endabschnitt (13) miteinander verbunden sind.

10. Cockpitquerträgerbaugruppe (12) nach Anspruch 9,
wobei der Cockpitquerträger (10) eine erste Mittelöffnung (18) aufweist, die den Hohlkanal (16) mit der Umgebung verbindet, und sich der erste Leitungsabschnitt (25) der ersten Lüftungsleitung (22) von der ersten Mittelöffnung (18) zum ersten Endabschnitt (13) erstreckt.

11. Cockpitquerträgerbaugruppe (12) nach einem der vorhergehenden Ansprüche mit Alternative a) von Anspruch 1,
wobei der Hohlkanal (19) axial mit der Aussparung (51) überlappt, die den Montageabschnitt (54) umfasst.

12. Cockpitquerträgerbaugruppe (12) nach einem der vorhergehenden Ansprüche mit Alternative a) von Anspruch 1,
wobei der Cockpitquerträger (10) mindestens einen Abschnitt mit einer Außenschale und ferner mindestens eine von der Schale umgebene Innenfläche aufweist, wobei die Aussparung (51) einen lokalen Ausschnitt in der Schale umfasst oder durch diesen gebildet wird, so dass die Innenfläche lokal freigelegt ist.

13. Cockpitquerträgerbaugruppe (12) nach einem der vorhergehenden Ansprüche und nach Anspruch 10,
wobei die Cockpitquerträgerbaugruppe (12) ferner mindestens ein vertikales Stützelement (30) umfasst, das den Cockpitquerträger (10) in Bezug auf einen Fahrzeugboden stützt, wobei das vertikale Stützelement (30) näher an der ersten Mittelöffnung (18) als an einem der ersten und zweiten Endabschnitte (13, 14) positioniert ist.

14. Cockpitquerträgerbaugruppe (12) nach einem der vorhergehenden Ansprüche,
wobei eine Querschnittsform des Cockpitquerträgers (10) über mindestens die Hälfte oder mindestens drei Viertel seiner Länge konstant ist.

15. Cockpitquerträgerbaugruppe (12) nach einem der vorhergehenden Ansprüche,
wobei eine Querschnittsform des Cockpitquerträgers (10) eine kleinere vertikale Abmessung im Vergleich zu einer horizontalen Abmessung davon aufweist.

## Revendications

1. Assemblage de poutre transversale (12) pour un véhicule automobile, avec :
- une poutre transversale (10) ayant une première partie d'extrémité (13) et une deuxième partie d'extrémité (14) qui sont espacées l'une de l'autre le long d'un axe longitudinal (L) de la poutre transversale (10),
- un premier élément de fixation (32) relié à la première partie terminale (13) ;
- un deuxième élément de fixation (32) relié à la deuxième partie d'extrémité (14) ;
- un canal creux (16) s'étendant à travers la poutre transversale (10) de la première partie d'extrémité (13) à la deuxième partie d'extrémité (14) ;
- un premier conduit de ventilation (22) qui s'étend à travers une première section du canal creux (16) vers la première partie d'extrémité (13),
**caractérisé par le fait qu'**au moins l'un des éléments suivants est fourni :
a) dans lequel le premier élément de fixation (32) chevauche axialement le premier conduit de ventilation (22), dans lequel le premier conduit de ventilation (22) est au moins partiellement reçu dans un renfoncement (38) du premier élément de fixation (32) et dans lequel le premier conduit de ventilation (22) s'étend à travers une première ouverture d'extrémité (20) dans la première partie d'extrémité (13) de la poutre transversale de voiture (10), la première ouverture d'extrémité (20) relie le canal creux (16) à l'environnement, et le premier élément de fixation (32) se superpose axialement à une position de ladite première ouverture d'extrémité (20),
b) la poutre transversale (10) a au moins un renfoncement (51) qui comprend une partie de montage (54) pour monter un assemblage de volant (52) sur la poutre transversale (10), le renfoncement (51) étant obtenu en enlevant une partie de la surface circonférentielle extérieure de la poutre transversale (10) pour en exposer les surfaces intérieures.

2. Assemblage de poutre transversale (12) selon la variante a) de la revendication 1,
dans lequel la poutre transversale (10) est un élément monobloc.

3. Assemblage de poutre transversale (12) selon la revendication 1 ou 2,
comprenant en outre : un deuxième conduit de ventilation (24) qui s'étend à travers une deuxième section du canal creux (16) vers la deuxième partie d'extrémité (14).

4. Assemblage de poutre transversale (12) selon l'une quelconque des revendications précédentes,
dans lequel la poutre transversale (10) est un profilé d'extrusion.

5. Assemblage de poutre transversale (12) selon l'une quelconque des revendications précédentes,
dans lequel le premier et le deuxième élément de fixation (32) sont au moins partiellement reçus dans la poutre transversale (10), en particulier dans le canal creux (16).

6. Assemblage de poutre transversale (12) selon l'une quelconque des revendications précédentes avec la variante a) de la revendication 1,
dans lequel le premier élément de fixation (32) agit comme un élément d'arrêt axial pour le premier conduit de ventilation (22) afin de sécuriser sa position axiale.

7. Assemblage de poutre transversale (12) selon l'une quelconque des revendications précédentes avec la variante a) de la revendication 1,
dans lequel la première ouverture d'extrémité (20) a une forme qui correspond à la forme de l'évidement (38) dans le premier élément de fixation (32).

8. Assemblage de poutre transversale (12) selon la revendication 7,
dans lequel le renfoncement (38) s'étend le long des parties du bord de la première ouverture d'extrémité (20) et/ou est de forme congruente à ladite première ouverture d'extrémité (20) et/ou entoure au moins partiellement ladite première ouverture d'extrémité (20).

9. Assemblage de poutre transversale (12) selon l'une quelconque des revendications précédentes,
dans lequel le premier conduit de ventilation (22) comprend une première section de conduit (25) et une deuxième section de conduit (28) qui sont reliées l'une à l'autre près de la première partie d'extrémité (13).

10. Assemblage de poutre transversale (12) selon la revendication 9,
la poutre transversale (10) possède une première ouverture centrale (18) reliant le canal creux (16) à l'environnement et la première section de conduit (25) du premier conduit de ventilation (22) s'étend de la première ouverture centrale (18) à la première partie d'extrémité (13).

11. Assemblage de poutre transversale (12) selon l'une quelconque des revendications précédentes avec la variante b) de la revendication 1,
dans lequel le canal creux (19) se superpose axialement à la cavité (51) comprenant la partie de montage (54).

12. Assemblage de poutre transversale (12) selon l'une quelconque des revendications précédentes avec la variante b) de la revendication 1,
la poutre transversale (10) comporte au moins une section munie d'une coque extérieure et au moins une surface intérieure entourée de la coque, le renfoncement (51) comprenant ou étant formé par une découpe locale dans la coque, de sorte que la surface intérieure est localement exposée.

13. Assemblage de poutre transversale (12) selon l'une des revendications précédentes et la revendication 10,
assemblage de poutre transversale (12) comprend en outre au moins un élément de support vertical (30) soutenant la poutre transversale (10) par rapport au plancher du véhicule, l'élément de support vertical (30) étant positionné plus près de la première ouverture centrale (18) que de la première et de la deuxième partie d'extrémité (13, 14).

14. Assemblage de poutre transversale (12) selon l'une quelconque des revendications précédentes,
dans lequel la forme de la section transversale de la poutre transversale (10) est constante sur au moins la moitié ou au moins les trois quarts de sa longueur.

15. Assemblage de poutre transversale (12) selon l'une quelconque des revendications précédentes,
dans lequel la forme de la section transversale de la poutre transversale (10) présente une dimension verticale inférieure à sa dimension horizontale.
